# FASCICULE DE BREVET EUROPEEN

(11) **EP 2 788 453 B1**
(45) Date de publication et mention de la délivrance du brevet: **17.03.2021**
(21) Numéro de dépôt: 12783947.0
(22) Date de dépôt: 31.10.2012
(51) Int. Cl.: C10G 2/00, C10K 3/00, C01B 3/36, C10J 3/72, C25B 1/04, F23C 7/00, C10K 1/00, C10K 3/02

(54) **PROCEDE DE CONVERSION THERMOCHIMIQUE D'UNE CHARGE CARBONEE EN GAZ DE SYNTHESE CONTENANT MAJORITAIREMENT H2 ET CO**
VERFAHREN ZUR THERMOCHEMISCHEN UMWANDLUNG EINES ROHSTOFFS AUF KOHLENSTOFFBASIS IN EIN SYNTHESEGAS MIT VOR ALLEM H2 UND CO
PROCESS FOR THE THERMOCHEMICAL CONVERSION OF A CARBON-BASED FEEDSTOCK TO SYNTHESIS GAS CONTAINING PREDOMINANTLY H2 AND CO

(30) Priorité: 04.11.2011 FR 1159985
(43) Date de publication de la demande: 15.10.2014
(73) Titulaire: Commissariat à l'Énergie Atomique et aux Énergies Alternatives, 75015 Paris (FR)
(72) Inventeur: CASTELLI, Pierre, F-38330 Saint Nazaire Les Eymes (FR); BOISSONNET, Guillaume, F-38100 Grenoble (FR)
(74) Mandataire: Ahner, Philippe
(86) Numéro de dépôt international: PCT/EP2012/071594
(87) Numéro de publication internationale: WO 2013/064552

(56) Documents cités:
- FR-A1- 2 940 857
- FR-A1- 2 947 833
- US-A1- 2008 115 415
- JEAN-MARIE SEILER ET AL: "Technical and economical evaluation of enhanced biomass to liquid fuel processes", ENERGY, vol. 35, no. 9, 1 septembre 2010 (2010-09-01), pages 3587-3592, XP055028263, ISSN: 0360-5442, DOI: 10.1016/j.energy.2010.04.048
- QINGXI FU ET AL: "Syngas production via high-temperature steam/CO2 co-electrolysis: an economic assessment", ENERGY & ENVIRONMENTAL SCIENCE, vol. 3, no. 10, 16 août 2010 (2010-08-16), page 1382, XP055028296, ISSN: 1754-5692, DOI: 10.1039/c0ee00092b

## Description

### DOMAINE TECHNIQUE

L'invention concerne un nouveau procédé de conversion thermochimique d'une charge carbonée en gaz de synthèse contenant majoritairement de l'hydrogène (H₂) et du monoxyde de carbone (CO), en vue de produire des carburants liquides par synthèse Fischer-Tropsch.

### ART ANTÉRIEUR

On désigne sous l'appellation « charge carbonée », tout matériau combustible constitué de composés contenant du carbone.

Il peut donc s'agir de biomasse, c'est-à-dire tout matériau inhomogène d'origine végétale contenant du carbone, tel que de la biomasse ligno-cellulosique, des résidus forestiers ou agricoles (paille), qui peut être quasi-sec ou imbibé d'eau comme les déchets ménagers.

Il peut aussi s'agir d'un combustible d'origine fossile, tel que le charbon.

Il peut aussi s'agir de déchets combustibles d'origine industrielle contenant du carbone, tel que des matières plastiques ou des pneumatiques.

Il peut aussi s'agir d'une combinaison de biomasse et de combustible d'origine fossile.

Les procédés actuels en cours d'étude ou à l'échelle de pilote industriel, permettant de convertir par voie thermochimique la biomasse en carburant liquide par une synthèse chimique selon le procédé largement connu sous le nom « procédé Fischer Tropsch », comprennent nécessairement une étape de gazéification de la biomasse à la vapeur d'eau pour obtenir un gaz de synthèse contenant majoritairement du monoxyde de carbone (CO) et de l'hydrogène (H₂). Le procédé Fischer Tropsch permet alors à partir de CO et d'H₂ d'obtenir des chaines -CH₂- semblables à celle du gasoil selon l'équation suivante :

(2n+1)H₂+nCO→CₙH₂ₙ₊₁₂₊nH₂O.

L'étape de gazéification proprement dite est réalisée en continu à partir de biomasse de nature et de granulométrie différentes stockée habituellement à la pression atmosphérique, dans un réacteur chimique (réacteur de gazéification), soit de type à lit fluidisé soit de type à flux entraîné fonctionnant sous pression.

Les réacteurs de type à lit fluidisé sont d'une efficacité moindre en raison de la température de réaction comprise généralement entre 800°C et 1000°C, qui conduit à une conversion moindre de la biomasse en gaz de synthèse CO et H₂ avec la génération entre autre de méthane (CH₄). Ils ont l'avantage par contre de ne nécessiter qu'un séchage et un broyage de granulométrie moyenne de la biomasse sans autre préparation spécifique. Le séchage et broyage n'induisent qu'une faible perte de rendement du procédé global. Les réacteurs à lit fluidisé peuvent être adaptés pour produire des gaz naturels de synthèse (« SNG »).

Les réacteurs à flux entraîné ont quant à eux un excellent rendement de conversion de la biomasse en gaz de synthèse CO et H₂, et sont donc tout à fait appropriés à la production de carburants ou produits chimiques de synthèse à partir de la biomasse. Ils servent donc à ce jour de référence dans le domaine des carburants désignés sous l'appellation en anglais « *Biomass to Liquid* » (en abrégé BtL). Cependant, ils nécessitent un prétraitement thermique de la biomasse afin que celle-ci puisse être broyée avec une granulométrie fine et injectée aisément, ce qui introduit une perte de masse ou d'énergie et donc une diminution du rendement pour le procédé.

L'apport de chaleur des procédés actuellement connus est fait en général par la combustion d'une partie de la biomasse elle-même (biomasse brute, gaz, résidus solides, goudrons...). Ces procédés sont dits « autothermique ». Dans les procédés autothermiques, une partie du carbone provenant de la biomasse n'est pas donc pas convertie en carburant liquide. L'apport de chaleur du procédé peut être fait par une source thermique externe, de préférence d'origine électrique nucléaire sans émission de CO₂.

Ces procédés sont dits « allothermique » avec comme avantage un rendement massique supérieur à celui des procédés autothermiques.

Quelle que soit la technologie des réacteurs retenus, et comme mentionné ci-dessus, la gazéification a pour inconvénient majeur de nécessiter une préparation spécifique de la biomasse, comme la torréfaction, qui est consommatrice d'énergie et fait chuter le rendement matière.

La demande de brevet US 2009/0235587 divulgue un procédé de production d'un gaz de synthèse à partir de la chaleur produite lors de l'oxydation d'une charge carbonée. US 2011/0041740 divulgue un procédé de conversion thermochimique d'une charge carbonée.

Par ailleurs, il est largement connu d'incinérer des déchets ménagers pour réaliser une cogénération d'électricité et de chaleur. En outre, il a déjà été envisagé de réaliser une oxycombustion de déchets ménagers : voir [1].

Enfin, une évaluation technico-économique de différents procédés de transformation de la biomasse en carburant liquide (biocarburant) avec différentes variantes a déjà été faite : une présentation en est donnée dans [2].

Le but de l'invention est de proposer un nouveau procédé de conversion thermochimique d'une charge carbonée en gaz de synthèse contenant majoritairement de l'hydrogène (H₂) et du monoxyde de carbone (CO), en vue de produire des carburants liquides ou autres produits chimiques de synthèse, qui présente un meilleur rendement énergétique et/ou massique que celui des procédés actuellement connus.

Un but particulier est de proposer un nouveau procédé de conversion thermochimique d'une charge carbonée en gaz de synthèse qui permette d'atteindre un meilleur rendement énergétique et/ou massique que ceux des procédés évalués économiquement dans la publication [2].

### EXPOSÉ DE L'INVENTION

Pour ce faire, l'invention a pour objet un procédé de conversion d'une charge carbonée en gaz de synthèse contenant majoritairement de l'hydrogène (H₂) et du monoxyde de carbone (CO), ce procédé étant tel que défini dans la revendication 1.

Par oxycombustion, on entend la définition actuellement répandue, telle que présentée à l'adresse internet suivante :
http://en.wikipedia.org/wiki/Oxyfuel_combustion_process,
c'est-à-dire une combustion basée sur de l'air enrichi en oxygène -à savoir avec une teneur en oxygène O₂ généralement supérieure à la teneur en oxygène de l'air, qui est généralement de 21% en volume (O₂>21%)-, ou bien sur de l'O₂ pur, en tant que comburant.

Généralement, l'oxycombustion produit essentiellement, voire uniquement, du CO₂ comme gaz, sans CO. Généralement, tout le carbone de la charge carbonée est transformé en CO₂.

Selon un mode de réalisation avantageux, l'électrolyse de l'eau à haute température (EHT) de l'étape b/ est en outre réalisée à partir de l'électricité produite selon l'étape a/. On augmente encore le rendement du procédé car il n'y a moins d'électricité externe au procédé à apporter.

L'invention est une combinaison de procédés élémentaires connus individuellement et déjà éprouvés mais qui n'avaient jamais été couplés entre eux tous les trois en vue de produire du gaz de synthèse contenant majoritairement de l'hydrogène et du monoxyde de carbone.

Ainsi, en premier lieu, ne pas mettre en œuvre de gazéification de la charge carbonée permet une consommation énergétique en entrée du procédé de conversion bien moindre car :
- on s'affranchit de toute préparation spécifique de la charge carbonée, et particulièrement de la biomasse (broyage, torréfaction...) ;
- on obtient une diminution des oxydes d'azote du fait de la combustion à l'oxygène enrichi ou pur au lieu de l'air ;
- on peut atteindre des températures de combustion élevées permettant un meilleur rendement de production d'électricité par l'étape de cogénération, et ainsi permettre une moindre consommation en électricité pour le procédé ;
- on n'a pas de perte de chaleur par la chaleur sensible du diazote N₂ par rapport à une combustion classique à l'air, et donc un meilleur rendement énergétique.

L'utilisation de la chaleur et, de préférence concomitamment de l'électricité produite(s) par l'oxycombustion dans l'électrolyse haute température permet également d'avoir une consommation énergétique (apport extérieur) moindre.

Comme détaillé par la suite, les inventeurs ont fait des premières évaluations des rendements énergétique et massique du procédé selon l'invention et ils ont mis en exergue que les performances atteintes sont bien meilleures que celles actuelles des procédés de référence Btl connus.

Jusqu'à ce jour, il n'avait pas été envisagé de mettre en œuvre la réaction dite de réaction inverse du gaz à l'eau (ou en anglais « reverse water gas shift » dont l'abréviation est RWGS), à partir simultanément d'une part du CO₂ produit par l'oxycombustion de biomasse et d'autre part de l'hydrogène produit par électrolyse de l'eau à haute température (EHT).

En ce qui concerne les mises en œuvre envisagées de l'étape b/ de l'électrolyse à haute température pour un rendement optimal, en particulier les températures et les réacteurs optimaux, on pourra avantageusement se reporter aux différentes publications et demandes de brevet au nom de la demanderesse.

En ce qui concerne l'étape c/ de réaction inverse de gaz à l'eau (RWGS), elle peut être réalisée aux environs de 800°C avec catalyseurs. Elle peut être également avantageusement mise en œuvre en milieu homogène, c'est-à-dire sans catalyseur, à hautes températures avec un rendement de conversion le plus élevé possible au moindre coût énergétique, et en ne produisant pas de gaz indésirable comme le méthane, comme proposé par la demanderesse dans la demande de brevet FR 10 61178 déposée le 23 décembre 2010, publiée le 24 février 2012 en tant que FR-A1-2 963 932 et intitulée « procédé de recyclage amélioré du CO₂ par réaction inverse du gaz à l'eau (RWGS) ».

Selon une variante, tout l'oxygène produit par l'électrolyse (EHT) selon l'étape b/ est utilisé en tant que comburant de l'étape a/ d'oxycombustion.

Alternativement, seule une partie de l'oxygène produit par l'électrolyse (EHT) selon l'étape b/ est utilisée en tant que comburant de l'étape a/ d'oxycombustion, l'autre partie étant récupérée.

De préférence, l'eau (H₂O) produite par la réaction RWGS selon l'étape c/ est recyclée et injectée en tant que produit d'entrée de l'électrolyse EHT selon l'étape b/.

Le procédé comprend une étape d/ de nettoyage (épuration) du gaz obtenu selon l'étape c/ de sorte à extraire l'hydrogène (H₂) et le monoxyde de carbone (CO). Le dioxyde de carbone (CO₂) nettoyé (épuré) selon l'étape d/ est de préférence injecté en tant que produit d'entrée à la réaction RGWS selon l'étape c/.

L'eau (H₂O) issue du nettoyage (épuration) du gaz selon l'étape d/ est également de préférence recyclée et injectée en tant que produit d'entrée de l'électrolyse EHT selon l'étape b/.

Le monoxyde de carbone (CO) et l'hydrogène (H₂) issus du nettoyage selon l'étape d/ sont injectés en tant que produits d'entrée d'une étape e/ selon laquelle on réalise une synthèse Fischer Tropsch (FT) pour obtenir un carburant liquide.

Avantageusement, l'eau (H₂O) issue de la synthèse Fischer Tropsch FT selon l'étape e/ est recyclée et injectée en tant que produit d'entrée de l'électrolyse EHT selon l'étape b/.

Le gaz de tête de la synthèse FT selon l'étape e/ est injecté en tant que produit d'entrée de l'oxycombustion selon l'étape a/.

La chaleur générée par la synthèse FT selon l'étape e/ peut servir de préférence à la production de vapeur d'eau en entrée de l'électrolyse EHT selon l'étape b/.

Le procédé s'applique à une charge carbonée qui est de la biomasse, avec un taux d'humidité de biomasse inférieur à 50%. L'oxycombustion de la biomasse produit de l'eau et du CO₂, cette eau peut être recyclée dans le procédé selon l'invention et elle est suffisante en quantité pour celui-ci. La biomasse doit être donc suffisamment sèche, car l'eau contenue dans la biomasse va être chauffée inutilement et donc faire baisser le rendement du procédé. Aussi, un taux d'humidité inférieur à 50% est avantageux.

### BRÈVE DESCRIPTION DES DESSINS

D'autres avantages et caractéristiques du procédé selon l'invention ressortiront mieux à la lecture de la description détaillée de l'invention faite en référence aux figures suivantes parmi lesquelles :
- la figure 1 est un schéma de principe d'un mode de réalisation du procédé selon l'invention;
- la figure 2 reprend le schéma de la figure 1 en y intégrant les bilans de matière (espèces consommées ou produites à chaque étape du procédé).

### EXPOSÉ DÉTAILLÉ DE MODES DE RÉALISATION PARTICULIERS

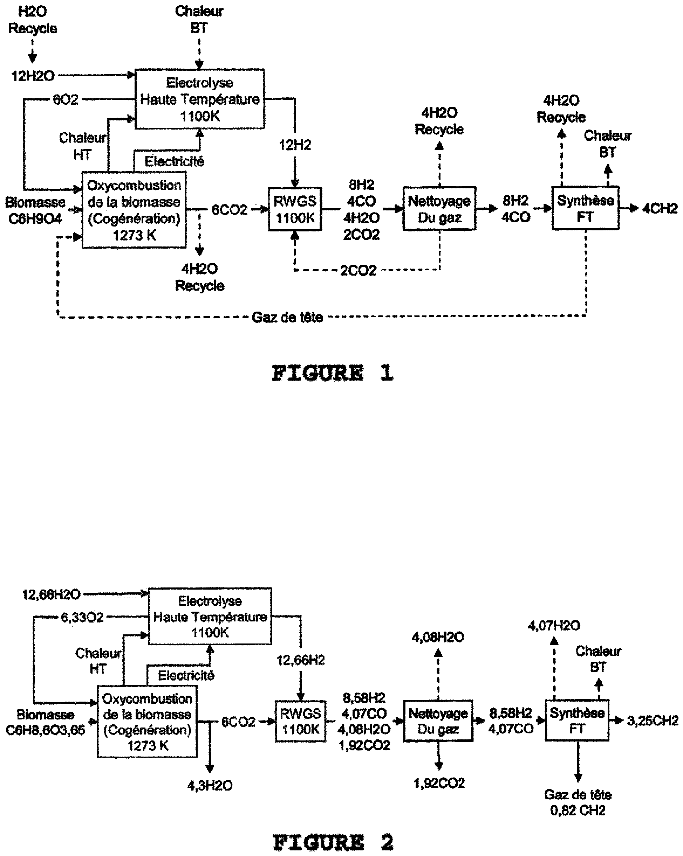

Comme mieux visible en figure 1, le procédé de conversion thermochimique de la biomasse C₆H₉O₄ en entrée selon l'invention consiste à réaliser les étapes suivantes en combinaison :
a/ une oxycombustion de la biomasse, de préférence à des températures de l'ordre de 1273 K pour faire une cogénération de chaleur à des hautes températures de l'ordre de 1100 K et d'électricité. De préférence, on réalise cette étape a/ d'oxycombustion dans un réacteur de cogénération de type à lit fluidisé.
b/ une électrolyse de l'eau à hautes températures (EHT), de préférence à des températures proches de 1100 K, l'électrolyse EHT étant réalisée par apport de toute la chaleur et de toute l'électricité produite par la cogénération selon l'étape a/. Comme indiqué en pointillés sur les figures 1 et 2, l'eau produite selon l'oxycombustion peut être recyclée et injectée en tant que produit d'entrée de l'électrolyse selon l'étape b/.
c/ une réaction inverse du gaz à l'eau (RWGS) à partir du dioxyde de carbone (CO₂) produit selon l'étape a/ et de l'hydrogène (H₂) produit selon l'étape b/. De préférence, on réalise cette étape c/ de RWGS dans un réacteur de type catalytique ou à haute température.

Selon l'étape c/, on produit un gaz de synthèse constitué essentiellement de monoxyde de carbone CO et d'hydrogène H₂, et également de dioxyde de carbone CO₂ et d'eau H₂O. La réaction chimique qui se produit s'écrit de la manière suivante :

CO₂+H₂→CO+H₂O.

Cette réaction peut être réalisée à environ 800°C (1100K) à l'aide de catalyseurs, ou aux environs de 1200°C sans catalyseurs. On précise ici que l'ensemble des débits gazeux reste en température dans la mesure du possible. On peut envisager également un refroidissement du gaz en sortie du réacteur mettant en œuvre la réaction RWGS selon l'étape c/.

Selon une étape d/ ultérieure, on réalise un nettoyage du gaz produit avec une séparation de l'eau produite. Comme indiqué en pointillés sur les figures 1 et 2, l'eau produite peut éventuellement être réinjectée dans le réacteur mettant en œuvre l'étape b/ d'électrolyse haute température EHT.

Enfin selon une étape e/, le gaz de synthèse CO+H₂ nettoyé sert d'intermédiaire réactionnel de base pour la production de produits de synthèses (carburants liquides (Diesel FT, « DME », Méthanol) ou gazeux (« SNG »), ou produits chimiques de synthèse tels que le méthanol par exemple). Par exemple, il permet d'obtenir un carburant liquide par synthèse Fisher Tropsch. Comme illustré en pointillés sur la figure 1, le gaz de tête produit peut être recyclé et injecté en tant qu'entrée de l'oxycombustion selon l'étape a/. De même, l'eau produite lors de la synthèse FT peut être recyclée et injectée en entrée d'électrolyse EHT et la chaleur dégagée par la synthèse, même à des températures moindres (BT), typiquement comprise entre 200 et 300°C, peut servir à l'électrolyse EHT selon l'étape b/. En final, les chaînes d'hydrocarbures, de formule moyenne -CH₂- produites servent en tant que carburant liquide qui peut être désigné usuellement comme un biocarburant.

Les inventeurs ont fait des calculs sur le procédé de conversion thermochimique de la biomasse selon l'invention qui vient d'être décrit. Plus précisément des premiers calculs de bilan matière et d'énergie ont été faits afin d'évaluer les performances du procédé.

Un exemple de bilan des espèces consommées ou produites est représenté de manière synoptique sur le schéma de la figure 2. On précise ici que les valeurs indiquées sont des valeurs théoriques avec des réactions totales.

En première approximation, les valeurs du calcul à l'équilibre thermodynamique à 1100K montrent qu'avec 6 moles de CO₂ (produits à partir de l'oxycombustion d'une mole de biomasse selon l'étape a/), et de 12 moles de H₂ (produits à partir de l'électrolyse haute températures de 12 moles de H₂O), on obtient par la réaction de RWGS selon l'étape c/ 8 moles d'H₂ et 4 moles de CO, avec un rapport molaire H₂/CO=2 nécessaire pour la synthèse FT selon l'étape e/.

Le tableau 1 ci-dessous récapitule le bilan molaire des espèces produites en moles par moles de la biomasse introduite dans un réacteur d'oxycombustion, ainsi que les conditions de pression et température.

**Tableau 1 : Bilan molaire étape par étape.**

| | Unité | Oxycombustion | Electrolyse HT | RWGS | Synthèse FT |
|---|---|---|---|---|---|
| **Etapes du procédé selon l'invention** | | **a/** | **b/** | **c/** | **e/** |
| Température | K | 1273 | 1100 | 1100 | 500 |
| Pression | Barg (bar jauge) | 1 à 30 | 1 à 30 | 1 à 30 | 20 à 30 |
| Biomasse C₆H₈, ₆O_{3,65} | mol | -1,00 | 0,00 | 0,00 | |
| H₂O | mol | 4,30 | -12,66 | 4,08 | 4,07 |
| O₂ | mol | -6,33 | 6,33 | - | - |
| H₂ | mol | | 12,66 | -12,66 (entrée) 8,56 (sortie) | -8,14 |
| CO | mol | | | 4,07 | -4,07 |
| CO₂ | mol | 6,00 | | -6,00 | |
| CH₂ - gaz de tête | mol | | | | 0,82 |
| CH₂ - carburant | mol | - | | | 3,25 |

On précise que les calculs présentés dans le tableau ci-dessus ont été effectués avec un débit de biomasse en entrée de 10t/h et que la composition à la sortie du réacteur mettant en œuvre la réaction RWGS selon l'étape c/ est calculée à l'équilibre thermodynamique.

On précise également que, par hypothèse, il a été considéré 80% de rendement de conversion du CO en carburant liquide.

Dans cette configuration et pour un débit d'entrée de 10 t/h de biomasse, les puissances échangées sont celles indiquées dans le tableau 2 ci-dessous. Elles sont notées négativement quand elles sont dégagées (exothermique) et positivement quand elles sont consommées (endothermique).

**Tableau 2 : Puissances produites et consommées à chaque étape.**

| Etapes | Unité | Oxycombustion a/ | Electrolyse HT b/ | Réaction RWGS c/ | Synthèse FT e/ |
|---|---|---|---|---|---|
| Etapes exothermiques | | a/ | | | e/ |
| Puissance | MW | **-43,02** | | | |
| Electricité produite | | -17,02 | | | |
| Chaleur résiduelle | | -25,81 | b/ | c/ | -13,40 |
| Etapes endothermiques | | | b/ | c/ | |
| Puissance | MW | | 81,63 | 2,73 | |
| Enthalpie réaction | Kwh/Nm³ d'H₂ | | 2,32 | | |
| Enthalpie chaleur | | | 1,68 | | |
| Besoin en électricité | MW | | 47,29 | | |
| Besoin en chaleur | | | 34,34 | 2,73 | |

On précise ici qu'en ce qui concerne la chaleur, il y a vaporisation et chaleur latente jusqu'à 800°C.

On précise également qu'on considère que l'électricité produite par le réacteur de cogénération selon l'étape a/ peut être valorisée avec un rendement de 40%, compte tenu des températures atteintes.

Enfin, on a considéré l'enthalpie de réaction de la réaction exothermique de synthèse FT égale à -0,165 MJ/mol.

Du tableau 2, on en déduit que :
- le besoin électrique (47MW) est supérieur à ce qui peut être produit (17MW). Il est donc nécessaire d'importer de l'électricité d'une source extérieure pour mettre en œuvre le procédé de conversion selon l'invention ;
- la demande et la production de chaleur s'équilibrent. Les niveaux de température peuvent permettre le transfert de chaleur des zones chaudes exothermiques vers les zones froides endothermiques.

En final, le tableau 3 ci-dessous récapitule les rendements du procédé selon l'invention.

On précise que, dans ce tableau, le rendement massique est défini par le rapport entre le débit massique de carburant produit et le débit massique de biomasse en entrée du procédé.

De même, le rendement énergétique est défini comme le rapport entre le contenu énergétique du produit obtenu en sortie du procédé par l'énergie introduite dans le procédé (énergie contenue dans la biomasse + énergie électrique injectée).

**Tableau 3 : Tableau récapitulatif des rendements du procédé de l'invention.**

| | Unité | Valeur |
|---|---|---|
| Débit de biomasse | kg/h | 10000 |
| Débit carburant CH₂ produit | | 4 101 |
| Rendement massique (CH₂ liquide uniquement) | % | 33 |
| Rendement massique (CH₂ liquide et gaz de tête) | % | 41 |
| PCI(*) produits en entrée | MW | 50,00 |
| Electricité | | 30,09 |
| Chaleur | | -2,15 |
| PCI(*) produits en sortie CH₂ (avec gaz de tête) | MW | 45,57 |
| Rendement énergétique | % | 57 |
| Rendement en énergie primaire | | 34 |
| Consommation de biomasse | J/J produit | 1,10 |
| Consommation électrique | | 0,66 |

| | | |
|---|---|---|
| (*) PCI : Pouvoir Calorifique Inférieur | | |

On précise ici que l'unité J/J produit désigne le rapport énergétique en joule/joule entre l'énergie injectée dans le procédé (sous forme de biomasse ou électricité) et l'énergie du produit obtenu. Ainsi il ressort du tableau que pour 1 joule de biocarburant fabriqué grâce au procédé selon l'invention, il faut injecter l'équivalent de 1,1 joule de biomasse et 0,66 joule d'électricité.

On précise encore que dans ce bilan de l'électricité doit être apportée de l'extérieur, les pertes ne sont pas considérées et que la chaleur à relativement basse température générée par la synthèse FT sert à la production de vapeur d'eau pour l'électrolyse EHT selon l'étape b/.

Le tableau 4 ci-dessous récapitule de manière comparative les rendements du procédé selon l'invention et ceux d'un procédé de référence donné dans la publication [2]. Ce procédé de référence est désigné par le numéro [14] du tableau 1 dans cette publication et en anglais comme suit : « *Torrefied Wood -Autothermai* - *HT heat exchanger* - *H2 (electricity)* - *with tail gas recycle* ». Ce procédé est donc un enchaînement des procédés élémentaires comme suit :
Torréfaction- gazéification en réacteur autothermique (énergie fournie par la combustion partielle de la biomasse avec de l'air enrichie en O₂)- Echange de chaleur à haute température- production d'H₂- recyclage du gaz de tête.

**Tableau 4 : Comparaison des rendements du procédé de l'invention et du procédé de référence.**

| | Unité | Procédé selon l'invention | Procédé de référence [14] selon publication [2] |
|---|---|---|---|
| Rendement massique | % | 41 | 50 |
| Rendement énergétique | | 57 | 51 |
| Rendement en énergie primaire | | 34 | 25 |
| Consommation de biomasse | J/J produit | 1,10 | 0,85 |
| Consommation électrique | | 0,66 | 0,98 |
| Consommation de gaz naturel | | 0 | 0,13 |

De ce tableau 4, on en déduit que les performances du procédé de conversion selon l'invention sont meilleures que celles du procédé de référence en termes de rendements d'énergie et de besoins en énergie extérieure au procédé, notamment en électricité.

On peut attribuer cela en particulier du fait que le besoin électrique global est plus faible qu'un procédé allothermique, et qu'il n'y a pas d'énergie perdue dans l'étape de préparation de la charge, en raison de la suppression de l'étape de torréfaction et de broyage de la biomasse.

En règle générale, le procédé selon l'invention peut permettre d'atteindre des performances meilleures que celles de procédés de production dit BtL (l'abrégé en anglais de *Biomass to Liquid*) qui sont la référence actuelle : voir publication [2].

Pour atteindre des performances encore supérieures, il est possible d'améliorer le rendement matière en valorisant le même nombre de carbones que dans le procédé de référence de [2], c'est-à-dire 5,3 au lieu de 4,07 dans le procédé de l'invention. Pour cela, les inventeurs pensent qu'il y a lieu de déplacer l'équilibre de la réaction RWGS selon l'étape c/. Dans ce cas, les inventeurs pensent qu'il est nécessaire soit de réaliser un ajout d'H₂ en excès à l'entrée du réacteur mettant en œuvre la réaction RWGS soit d'effectuer un recyclage interne de gaz avec une séparation entre monoxyde de carbone CO et hydrogène H₂. Il est possible de mieux évaluer ces perfectionnements par calcul, par exemple à partir du logiciel ProsimPlus® élaboré par la société Prosim.

Le tableau 5 ci-dessous indique les valeurs obtenues avec un équilibre de la réaction RWGS déplacé de manière à obtenir un nombre de carbones valorisables égal à 5,3.

**Tableau 5 : Tableau récapitulatif des rendements du procédé amélioré en déplaçant l'équilibre.**

| | Unité | Valeur |
|---|---|---|
| Débit de biomasse | kg/h | 10000 |
| Débit de carburant CH₂ produit | | 5338 |
| Rendement massique (CH₂ liquide, et gaz de tête) | % | 53,4 |
| PCI(*) produits en entrée | MW | 50,00 |
| Electricité | | 32,48 |
| Chaleur | | -3,61 |
| PCI(*) produits en sortie CH₂ (avec gaz de tête) | | 59,31 |
| Rendement énergétique | % | 72 |
| Rendement en énergie primaire | | 40 |
| Consommation de biomasse | J/J produit | 0,84 |
| Consommation électrique | | 0,55 |

| | | |
|---|---|---|
| (*) PCI : Pouvoir Calorifique Inférieur | | |

Ces calculs corroborent l'hypothèse des inventeurs, puisque les performances du procédé à équilibre de réaction RWGS déplacé, sont plus élevées que celles du procédé indiquées dans le tableau 3 précédent.

Il va de soi que l'on peut considérer que les valeurs indiquées ci-dessus sont supérieures à celles réelles que l'on peut espérer du fait qu'elles sont issues du calcul. Cela étant, elles peuvent être comparées aux valeurs de référence données dans la publication [2] déjà évoquée en préambule elles-aussi issues du calcul. On atteint ici un rendement matière comparable à celui du procédé de référence de la publication [2], une consommation de biomasse comparable et un rendement énergétique nettement supérieur (72% contre 51%), ainsi qu'un ajout d'électricité externe inférieur (0,55 J/J contre 0,85 J/J).

### Références citées

[1] : Technique de l'ingénieur Manuel G2051 « Traitements thermiques des déchets », paragraphe 3 « procédé » d'oxycombustion », Gérard Antonini ;
[2] : «Technical and economical évaluation of enhanced biomass to liquid fuel processes », Jean-Marie Seiler, Carole Hohwiller, Juliette Imbach, Jean-François Luciani, Energy, 35, 3587-3592, (2010).

## Revendications

1. Procédé de conversion thermochimique d'une charge carbonée en gaz de synthèse contenant majoritairement de l'hydrogène (H₂) et du monoxyde de carbone (CO), ledit procédé comprenant les étapes a), b), c), d) et e) suivantes :
a/ oxycombustion de la charge carbonée pour faire une cogénération d'électricité et de chaleur ;
b/ électrolyse de l'eau à haute température (EHT) à partir au moins de la chaleur produite selon l'étape a/ ;
c/ réaction inverse du gaz à l'eau (RWGS) à partir du dioxyde de carbone (CO₂) produit selon l'étape a/ et de l'hydrogène (H₂) produit selon l'étape b/ ;
d/ nettoyage du gaz obtenu selon l'étape c/ de sorte à extraire l'hydrogène (H₂) et le monoxyde de carbone (CO) ;
e/ le monoxyde de carbone (CO) et l'hydrogène (H₂) issus du nettoyage selon l'étape d/ sont injectés en tant que produits d'entrée d'une synthèse Fischer Tropsch (FT) pour obtenir un carburant liquide ;
le gaz de tête de la synthèse FT selon l'étape e/ étant injecté en tant que produit d'entrée de l'oxycombustion selon l'étape a/ ;
la charge carbonée étant de la biomasse dont le taux d'humidité de biomasse est inférieur à 50%.

2. Procédé de conversion thermochimique d'une charge carbonée en gaz de synthèse selon la revendication 1, selon lequel l'électrolyse de l'eau à haute température (EHT) de l'étape b/ est en outre réalisée à partir de l'électricité produite selon l'étape a/.

3. Procédé de conversion thermochimique d'une charge carbonée en gaz de synthèse selon la revendication 1 ou 2, selon lequel tout l'oxygène produit par l'électrolyse (EHT) selon l'étape b/ est utilisé en tant que comburant de l'étape a/ d'oxycombustion.

4. Procédé de conversion thermochimique d'une charge carbonée en gaz de synthèse selon la revendication 1 ou 2, selon lequel seule une partie de l'oxygène produit par l'électrolyse (EHT) selon l'étape b/ est utilisée en tant que comburant de l'étape a/ d'oxycombustion, l'autre partie étant récupérée.

5. Procédé de conversion thermochimique d'une charge carbonée en gaz de synthèse selon l'une quelconque des revendications 1 à 4, selon lequel l'eau (H₂O) produite par la réaction RWGS selon l'étape c/ est recyclée et injectée en tant que produit d'entrée de l'électrolyse EHT selon l'étape b/.

6. Procédé de conversion thermochimique d'une charge carbonée en gaz de synthèse selon l'une quelconque des revendications précédentes, selon lequel le dioxyde de carbone (CO₂) nettoyé selon l'étape d/ est injecté en tant que produit d'entrée à la réaction RGWS selon l'étape c/.

7. Procédé de conversion thermochimique d'une charge carbonée en gaz de synthèse selon l'une quelconque des revendications précédentes, selon lequel l'eau (H₂O) issue du nettoyage du gaz selon l'étape d/ est recyclée et injectée en tant que produit d'entrée de l'électrolyse EHT selon l'étape b/.

8. Procédé de conversion thermochimique d'une charge carbonée en gaz de synthèse selon l'une quelconque des revendications précédentes, selon lequel l'eau (H₂O) issue de la synthèse Fischer Tropsch FT selon l'étape e/ est recyclée et injectée en tant que produit d'entrée de l'électrolyse EHT selon l'étape b/.

9. Procédé de conversion thermochimique d'une charge carbonée en gaz de synthèse selon l'une quelconque des revendications précédentes, selon lequel la chaleur générée par la synthèse FT selon l'étape e/ sert à la production de vapeur d'eau en entrée de l'électrolyse EHT selon l'étape b/.

## Patentansprüche

1. Verfahren zur thermochemischen Umwandlung eines kohlenstoffhaltigen Einsatzmaterials in Synthesegas, das vorwiegend Wasserstoff (H₂) und Kohlenmonoxid (CO) enthält, wobei das Verfahren die nachstehenden Schritte a), b), c), d) und e) umfasst:
a/ Sauerstoffverbrennung des kohlenstoffhaltigen Einsatzmaterials zur Erzeugung von Strom und Wärme in Kraft-Wärme-Kopplung;
b/ Elektrolyse von Wasser bei hoher Temperatur (HTE) aus zumindest der in Schritt a/ erzeugten Wärme;
c/ Wassergas-Shift-Umkehrreaktion (RWGS) aus dem in Schritt a/ erzeugten Kohlendioxid (CO₂) und dem in Schritt b/ erzeugten Wasserstoff (H₂);
d/ Reinigen des in Schritt c/ gewonnenen Gases, um Wasserstoff (H₂) und Kohlenmonoxid (CO) zu extrahieren;
e/ Einbringen von aus der Gasreinigung von Schritt d/ stammendem Kohlenmonoxid (CO) und Wasserstoff (H₂) als Eingangsprodukte einer Fischer-Tropsch-(FT)-Synthese, um einen flüssigen Brennstoff zu gewinnen; wobei das Kopfgas der FT-Synthese gemäß Schritt e/ als Eingangsprodukt der Sauerstoffverbrennung gemäß Schritt a/ eingebracht wird;
wobei das kohlenstoffhaltige Einsatzmaterial Biomasse ist, wobei der Feuchtigkeitsgehalt der Biomasse unter 50% liegt.

2. Verfahren zur thermochemischen Umwandlung eines kohlenstoffhaltigen Einsatzmaterials in Synthesegas nach Anspruch 1, wobei die Hochtemperatur-Wasserelektrolyse (HTE) gemäß Schritt b/ ferner ausgehend von dem in Schritt a/ erzeugten Strom durchgeführt wird.

3. Verfahren zur thermochemischen Umwandlung eines kohlenstoffhaltigen Einsatzmaterials in Synthesegas nach Anspruch 1 oder 2, wobei der gesamte durch die Elektrolyse (HTE) gemäß Schritt b/ erzeugte Sauerstoff als Sauerstoffträger für Schritt a/ der Sauerstoffverbrennung verwendet wird.

4. Verfahren zur thermochemischen Umwandlung eines kohlenstoffhaltigen Einsatzmaterials in Synthesegas nach Anspruch 1 oder 2, wobei nur ein Teil des durch die Elektrolyse (HTE) gemäß Schritt b/ erzeugten Sauerstoffs als Sauerstoffträger für Schritt a/ der Sauerstoffverbrennung verwendet wird und der andere Teil zurückgewonnen wird.

5. Verfahren zur thermochemischen Umwandlung eines kohlenstoffhaltigen Einsatzmaterials in Synthesegas nach einem der Ansprüche 1 bis 4, wobei das durch die RWGS-Reaktion gemäß Schritt c/ erzeugte Wasser (H₂O) rezykliert und als Eingangsprodukt der HTE-Elektrolyse gemäß Schritt b/ eingebracht wird.

6. Verfahren zur thermochemischen Umwandlung eines kohlenstoffhaltigen Einsatzmaterials in Synthesegas nach einem der vorhergehenden Ansprüche, wobei das in Schritt d/ gereinigte Kohlendioxid (CO₂) als Eingangsprodukt für die RGWS-Reaktion gemäß Schritt c/ eingebracht wird.

7. Verfahren zur thermochemischen Umwandlung eines kohlenstoffhaltigen Einsatzmaterials in Synthesegas nach einem der vorhergehenden Ansprüche, wobei das Wasser (H₂O) aus der Gasreinigung gemäß Schritt d/ rezykliert und als Eingangsprodukt für die HTE-Elektrolyse gemäß Schritt b/ eingebracht wird.

8. Verfahren zur thermochemischen Umwandlung eines kohlenstoffhaltigen Einsatzmaterials in Synthesegas nach einem der vorhergehenden Ansprüche, wobei das Wasser (H₂O) aus der Fischer-Tropsch-FT-Synthese gemäß Schritt e/ rezykliert und als Eingangsprodukt für die HTE-Elektrolyse gemäß Schritt b/ eingebracht wird.

9. Verfahren zur thermochemischen Umwandlung eines kohlenstoffhaltigen Einsatzmaterials in Synthesegas nach einem der vorhergehenden Ansprüche, wobei die durch die FT-Synthese gemäß Schritt e/ erzeugte Wärme zur Erzeugung von Wasserdampf am Eingang der HTE-Elektrolyse gemäß Schritt b/ dient.

## Claims

1. Process for the thermochemical conversion of a carbon-based feedstock to synthesis gas containing predominantly hydrogen (H₂) and carbon monoxide (CO), comprising the following steps:
a/ oxycombustion of the carbon-based feedstock to carry out a cogeneration of electricity and of heat;
b/ high-temperature electrolysis (HTE) of water using at least the heat produced according to step a/;
c/ reverse water gas shift (RWGS) reaction starting from the carbon dioxide (CO₂) produced according to step a/ and from the hydrogen (H₂) produced according to step b/;
d) cleaning of the gas obtained according to step c/ so as to extract hydrogen (H₂) and carbon monoxide (CO);
e) the carbon monoxide (CO) and the hydrogen (H₂) derived from the cleaning according to step d/ are injected as input products of a Fischer Tropsch (FT) synthesis to obtain a liquid fuel;
the overhead gas of the FT synthesis according to step e/ being injected as input product of the oxycombustion according to step a/;
the carbon-based feedstock being biomass the moisture level of which is less than 50%.

2. Process for the thermochemical conversion of a carbon-based feedstock to synthesis gas according to claim 1, according to which the high-temperature electrolysis (HTE) of water of step b/ is also carried out using the electricity produced according to step a/.

3. Process for the thermochemical conversion of a carbon-based feedstock to synthesis gas according to claim 1 or 2, according to which all the oxygen produced by the electrolysis (HTE) according to step b/ is used as oxidising agent of the oxycombustion step a/.

4. Process for the thermochemical conversion of a carbon-based feedstock to synthesis gas according to claim 1 or 2, according to which only part of the oxygen produced by the electrolysis (HTE) according to step b/ is used as oxidising agent of the oxycombustion step a/, the other part being recovered.

5. Process for the thermochemical conversion of a carbon-based feedstock to synthesis gas according to any one of claims 1 to 4, according to which the water (H₂O) produced by the RWGS reaction according to step c/ is recycled and injected as input product of the HTE electrolysis according to step b/.

6. Process for the thermochemical conversion of a carbon-based feedstock to synthesis gas according to any one of the preceding claims, according to which the carbon dioxide (CO₂) cleaned according to step d/ is injected as input product for the RGWS reaction according to step c/.

7. Process for the thermochemical conversion of a carbon-based feedstock to synthesis gas according to any one of the preceding claims, according to which the water (H₂O) derived from the cleaning of the gas according to step d/ is recycled and injected as input product of the HTE electrolysis according to step b/.

8. Process for the thermochemical conversion of a carbon-based feedstock to synthesis gas according to any one of the preceding claims, according to which the water (H₂O) derived from the Fischer Tropsch FT synthesis according to step e/ is recycled and injected as input product of the HTE electrolysis according to step b/.

9. Process for the thermochemical conversion of a carbon-based feedstock to synthesis gas according to any one of the preceding claims, according to which the heat generated by the FT synthesis according to step e/ serves in the production of steam at input of the HTE electrolysis according to step b/.
